# EUROPEAN PATENT APPLICATION

(11) **EP 4 650 217 A1**
(43) Date of publication of application: **19.11.2025**
(21) Application number: 23917333.9
(22) Date of filing: 28.12.2023
(51) Int. Cl.: B60N 2/28

(54) **ISOFIX MECHANISM HAVING LOCKING FUNCTION, AND SAFETY SEAT**

(30) Priority: 17.01.2023 CN 202320174105 U
(71) Applicant: Ningbo Baby First Baby Products Co., Ltd., Ningbo, Zhejiang 315412 (CN)
(72) Inventor: ZHOU, Xiaolin, Ningbo, Zhejiang 315412 (CN); PAN, Xiaolu, Ningbo, Zhejiang 315412 (CN)
(74) Representative: Herrmann, Uwe
(86) International application number: PCT/CN2023/142714
(87) International publication number: WO 2024/152868

(57) **Abstract**

Provided are an International Standards Organization FIX (ISOFIX) mechanism having a locking function, and a safety seat, relating to the technical field of safety seats. The ISOFIX mechanism having the locking function includes: an outer sleeve (10); an inner sleeve (20) slidable relative to the outer sleeve (10); and a positioning member (30), a connection locking block (70), and a catch (60) movably arranged in the inner sleeve (20). The positioning member (30) is configured to rotate in a first direction to disengage from a positioning hole (1a) on the outer sleeve (10). The connection locking block (70) is provided with a first locking end (72) configured to press against the catch (60) and a second locking end (73) arranged adjacent to the positioning member (30). At an instant of collision, the catch (60) is configured to instantaneously rotate in the first direction and push the connection locking block (70) to slide from a first position to a second position, and allows the positioning member (30) to rotate in the first direction until the positioning member (30) is blocked by the second locking end (73) at the second position and is retained in the positioning hole (1a), to achieve locking. The safety seat includes the ISOFIX mechanism having the locking function. The ISOFIX mechanism does not retract when a collision accident occurs, thereby protecting a child in the safety seat.

## Description

### TECHNICAL FIELD

The present invention relates to the technical field of safety seats, and specifically to an International Standards Organization FIX (ISOFIX) mechanism having a locking function and a safety seat including the same.

### BACKGROUND

A child safety seat is composed of a strap assembly or flexible part with a safety buckle, an adjustment device, a connection device, and an auxiliary device (e.g., a portable crib, a baby carrying device, an auxiliary seat, or a collision protection device), and is fixed to a vehicle by a mounting and locking device on the vehicle, to limit the displacement of a child and reduce the injury to the child caused by accidents (e.g., collision or sudden deceleration).

However, existing child safety seats have the following drawbacks. When a vehicle has an accident such as a rear-end collision, the child safety seat will move toward the back of the seat of the vehicle under the collision inertia. Under the action of inertia force and contact force, the child suffers from a great acceleration in the direction from spine to head, resulting in an acceleration-induced penetration injury.

### SUMMARY

An objective of the present invention is to provide an ISOFIX mechanism having a locking function, which does not retract when a collision accident occurs, and allows a child safety seat using the ISOFIX mechanism to instantaneously jump upward upon locking of the ISOFIX mechanism, thereby reducing the impact force on a child in the child safety seat to protect the child.

Another objective of the present invention is to provide a safety seat including the ISOFIX mechanism having a locking function.

To achieve the above objectives, the following technical solution is adopted in the present invention. An International Standards Organization FIX (ISOFIX) mechanism having a locking function is provided, including: an outer sleeve; an inner sleeve slidable relative to the outer sleeve; and a positioning member, a connection locking block, and a catch, the positioning member, the connection locking block, and the catch being movably arranged in the inner sleeve. The positioning member is configured to rotate in a first direction to disengage from a positioning hole on the outer sleeve. The connection locking block is provided with a first locking end configured to press against the catch and a second locking end arranged adjacent to the positioning member. At an instant of collision, the catch is configured to instantaneously rotate in the first direction and push the connection locking block to slide from a first position to a second position, and allow the positioning member to rotate in the first direction until the positioning member is blocked by the second locking end at the second position and is retained in the positioning hole, to achieve locking.

Preferably, the catch has a first engaging position and a second engaging position, a first reset member is arranged between the catch and the connection locking block, the first reset member is configured to apply opposite forces to the connection locking block and the catch, to cause the first locking end to press against a locking portion of the catch, to fix the catch at the first engaging position, an open groove configured for an anchor rod to further push the catch is provided on the inner sleeve, and at the instant of collision, the anchor rod pushes the catch to cause the catch to instantaneously rotate in the first direction to the second engaging position.

Preferably, the ISOFIX mechanism having a locking function further includes a limiting structure configured to limit an angle of rotation of the catch.

Preferably, the catch includes a first catching portion and a second catching portion, the first catching portion has a first limiting surface and a first contact surface, the first limiting surface is configured to press against the limiting structure, the limiting structure is formed by a wall of the inner sleeve, the second catching portion has a second contact surface, and the second contact surface cooperates with the first contact surface to form the locking portion; and the second contact surface is a flat surface, and an edge of the first locking end is provided with a chamfer.

Preferably, the second locking end includes a limiting portion and an avoidance portion, where when the connection locking block is at the first position, the avoidance portion provides a space for rotation of the positioning member, and when the connection locking block is at the second position, the limiting portion presses against the positioning member.

Preferably, the avoidance portion is a V-shaped recess.

Preferably, the positioning member includes a fourth catching portion, the fourth catching portion is provided with a locking protrusion configured to be inserted into the positioning hole, and a pressing portion, and the pressing portion and the limiting portion are respectively provided with flat surfaces configured to press against each other.

Preferably, the ISOFIX mechanism having a locking function further includes a guide structure configured to guide a sliding direction of the connection locking block.

Preferably, the guide structure is formed by a wall of the inner sleeve, and the guide structure includes a plurality of upper limiting protrusions and a plurality of lower limiting protrusions respectively arranged on an upper side of the connection locking block and a lower side of the connection locking block, and further includes a plurality of left limiting protrusions and a plurality of right limiting protrusions respectively arranged on a left side of the connection locking block and a right side of the connection locking block; and the plurality of upper limiting protrusions, the plurality of lower limiting protrusions, the plurality of left limiting protrusions, and the plurality of right limiting protrusions are provided in a length direction of the connection locking block.

The present disclosure further provides a safety seat including the ISOFIX mechanism having a locking function.

Compared with the prior art, the present invention has the following advantages. At the instant of a collision accident, a force between the anchor rod and the catch is used to cause the catch to push the connection locking block to slide, and then the interference between the connection locking block and the positioning member is used to prevent the positioning member from disengaging from the positioning hole, to achieve locking of the ISOFIX mechanism. The safety seat instantaneously jumps upward upon locking of the ISOFIX mechanism, thereby effectively reducing the acceleration in the direction from the spine to the head of a child in the safety seat, to protect the child.

### BRIEF DESCRIPTION OF THE DRAWINGS

FIG. 1 is a schematic structural diagram of an existing ISOFIX mechanism.
FIG. 2 is a schematic structural diagram of an existing ISOFIX mechanism during retraction.
FIG. 3 is a schematic structural diagram of an ISOFIX mechanism having a locking function.
FIG. 4 is a schematic structural exploded view of an ISOFIX mechanism having a locking function.
FIG. 5 is a schematic diagram of a first process of installing a safety seat.
FIG. 6 is a schematic diagram of a second process of installing a safety seat.
FIG. 7 is a schematic diagram of a third process of installing a safety seat.
FIG. 8 is a schematic diagram of a fourth process of installing a safety seat.
FIG. 9 is a schematic structural diagram of an ISOFIX mechanism at an instant of collision.
FIG. 10 is a schematic enlarged view of part A in FIG. 9.
FIG. 11 is a schematic enlarged view of part B in FIG. 9.

In the drawings: 01. anchor rod; 10. outer sleeve; 1a. positioning hole; 20. inner sleeve; 21. first housing; 22. second housing; 2a. open groove; 30. positioning member; 31. fourth catching portion; 311. locking protrusion; 312. pressing portion; 60. catch; 61. first catching portion; 611. first limiting surface; 612. first contact surface; 62. second catching portion; 63. third catching portion; 70. connection locking block; 71. first reset member; 72. first locking end; 721. chamfer; 73. second locking end; 731. limiting portion; 732. avoidance portion; 81. upper limiting protrusion; 82. lower limiting protrusion; 83. left limiting protrusion; 84. right limiting protrusion.

### DETAILED DESCRIPTION OF THE EMBODIMENTS

The present invention will be further described through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

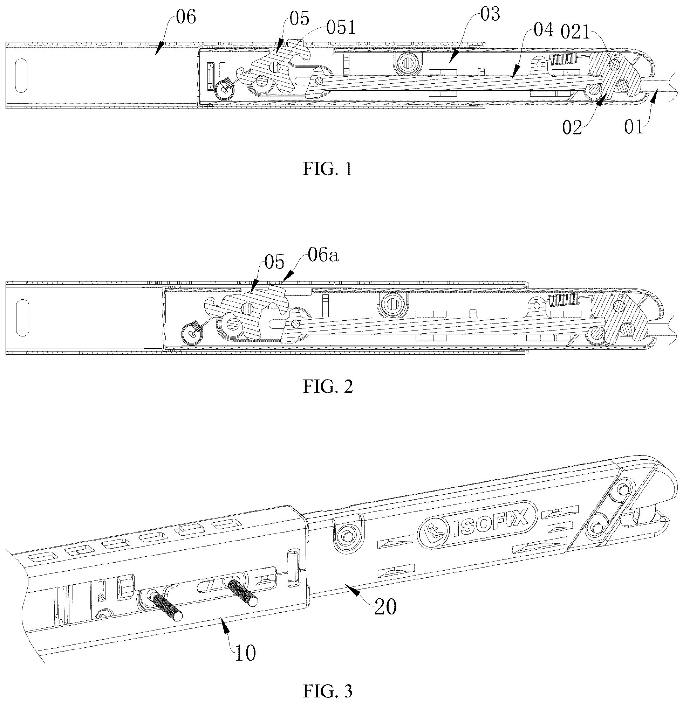

FIG. 1 and FIG. 2 show an existing ISOFIX mechanism. When a vehicle has an accident such as a rear-end collision, seats of the vehicle accelerate forward along with the vehicle. With reference to FIG. 1, an anchor rod 01 on the vehicle applies a leftward movement force to a catch 02. In this case, since the catch 02 is rotatably connected to an inner sleeve 03 by a first rotating shaft 021 and is locked by a connection locking block 04, there is no space for the catch 02 to rotate inward relative to the inner sleeve 03, and the catch 02 transmits the force from the anchor rod to the inner sleeve 03 through the first rotating shaft 021, causing the inner sleeve 03 to move leftward. The inner sleeve 03 drives a positioning member 05 to move leftward as a whole through a second rotating shaft 051. At this moment, the entire child safety seat moves toward the back of the vehicle seat due to the action of inertia, so that an outer sleeve 06 moves rightward relative to the inner sleeve 03, and a top of the positioning member 05 is driven by a positioning hole 06a to obtain a tendency to move rightward relative to the second rotating shaft 051, causing the positioning member 05 to rotate. In this process, the connection locking block 04 does not interfere with the positioning member 05, and the top of the positioning member 05 can smoothly disengage from the positioning hole 06a as shown in FIG. 2. Consequently, the ISOFIX mechanism retracts when an accident occurs. Under the action of inertia force and contact force, the child suffers from a great acceleration in the direction from spine to head, and is thus injured.

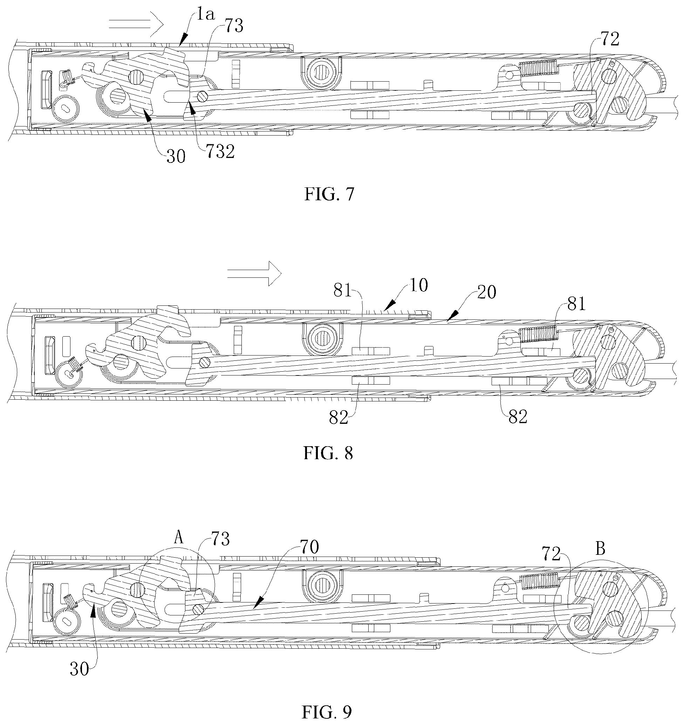

To solve this problem, the present invention provides an ISOFIX mechanism having a locking function. As shown in FIG. 3 to FIG. 11, the ISOFIX mechanism having a locking function includes: an outer sleeve 10; an inner sleeve 20 slidable relative to the outer sleeve 10; and a positioning member 30, a connection locking block 70, and a catch 60 movably arranged in the inner sleeve 20. The positioning member 30 is configured to rotate in a first direction to disengage from a positioning hole 1a on the outer sleeve 10 as shown in FIG. 7. The connection locking block 70 is provided with a first locking end 72 configured to press against the catch 60 and a second locking end 73 arranged adjacent to the positioning member 30. At an instant of collision, the catch 60 is configured to instantaneously rotate in the first direction and push the connection locking block 70 to slide from a first position shown in FIG. 8 to a second position shown in FIG. 9, and allow the positioning member 30 to rotate in the first direction until the positioning member 30 is blocked by the second locking end 73 at the second position and is retained in the positioning hole 1a, to achieve locking.

With reference to FIG. 9, the first direction is a clockwise direction.

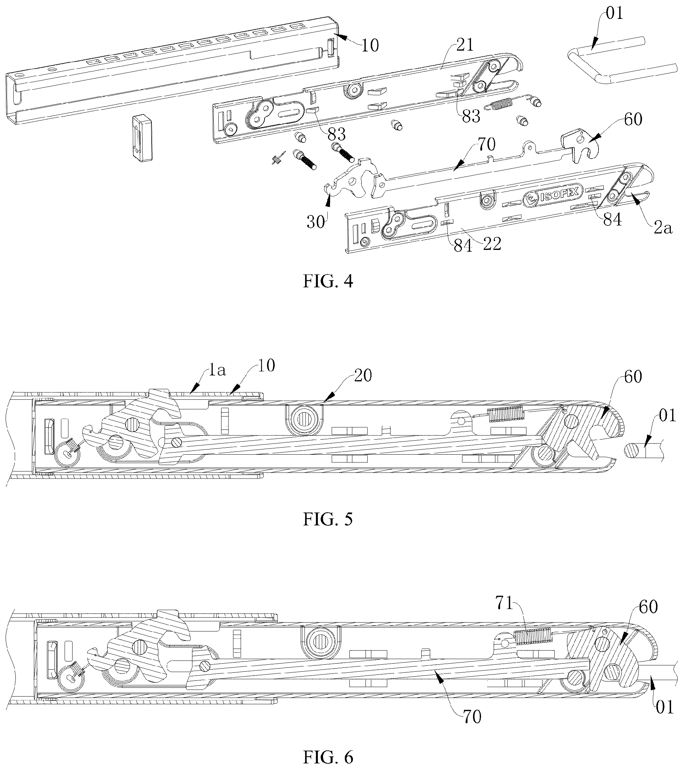

Specifically, as shown in FIG. 3 and FIG. 4, the inner sleeve 20 includes a first housing 21 and a second housing 22. The first housing 21 and the second housing 22 are connected to form a mounting cavity. The positioning member 30, the catch 60, and the connection locking block 70 are arranged in the mounting cavity. The first housing 21 and the second housing 22 are arranged opposite to each other in a left-right direction to facilitate the mounting of components such as the positioning member 30 and the connection locking block 70.

To fix a safety seat including the ISOFIX mechanism to a seat of a vehicle, as shown in FIG. 5, the outer sleeve 10 is pulled out to a maximum length relative to the inner sleeve 20, and the catch 60 is aligned with an anchor rod 01 on the seat of the vehicle. At this moment, the safety seat is pushed toward the back of the seat of the vehicle, so that the catch 60 rotates to engage with the anchor rod 01, and the connection locking block 70 moves rightward under the action of the first reset member 71 to instantaneously lock the catch 60, forming a state shown in FIG. 6. In this case, the safety seat is continuously pushed toward the back of the seat of the vehicle, the positioning member 30 is rotated in the first direction to disengage from the positioning hole 1a as shown in FIG. 7, and the outer sleeve 10 retracts relative to the inner sleeve 20 to a state shown in FIG. 8. At this moment, the safety seat is already fixed to the seat of the vehicle by the ISOFIX mechanism. Then, an anti-rollover device, such as a support leg or a top tether, is further arranged. Thus, the installation of the safety seat is completed, and a child can sit in the safety seat and be restrained by the restraint system.

The "instant of collision" herein refers to the moment when the vehicle has an accident such as a rear-end collision. As shown in FIG. 9, the child safety seat has a tendency to move toward the back of the seat of the vehicle under the collision inertia. In this case, under an instantaneous inertia force of the safety seat, the catch 60 rotates in the first direction, i.e., the clockwise direction shown in the figure, and pushes the connection locking block 70 to move leftward. When the connection locking block 70 moves to the second position, the connection locking block 70 is located below the positioning member 30. In this case, the ISOFIX mechanism is about to retract, the positioning member 30 rotates in the first direction to engage with the second locking end 73 at the second position, so that the positioning member 30 is retained in the positioning hole 1a, thus achieving locking of the ISOFIX mechanism. The safety seat instantaneously jumps upward upon locking of the ISOFIX mechanism, thereby effectively reducing the acceleration in the direction from the spine to the head of the child, to reduce the acceleration-induced penetration injury of the child in the vehicle caused by a collision accident, and protect the child.

For the ISOFIX mechanism in the prior art shown in FIG. 1 and FIG. 2, when the vehicle has a collision accident, the catch 02 does not instantaneously rotate to transmit the impact force. There is no space for the catch 02 to rotate relative to the inner sleeve 03, the catch 02 neither rotates nor drives the connection locking block 04, and the positioning member 05 can be normally rotated to disengage from the positioning hole 06a on the outer sleeve 06. Consequently, the ISOFIX mechanism retracts when an accident occurs. Under the action of inertia force and contact force, the child suffers from a great acceleration in the direction from spine to head and is thus injured.

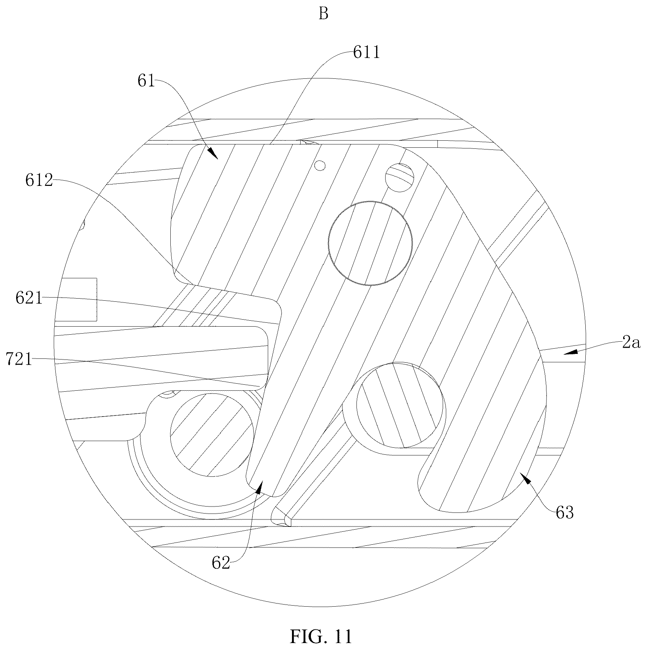

In this embodiment, the catch 60 has a first engaging position and a second engaging position, a first reset member 71 is arranged between the catch 60 and the connection locking block 70, and the first reset member 71 applies opposite forces to the connection locking block 70 and the catch 60, to cause the first locking end 72 to press against a locking portion of the catch 60, to fix the catch 60 at the first engaging position shown in FIG. 8. As shown in FIG. 4 and FIG. 11, an open groove 2a configured for the anchor rod 01 to further push the catch 60 is provided on the inner sleeve 20. At the instant of collision, the anchor rod 01 pushes the catch 60 to cause the catch 60 to instantaneously rotate in the first direction to the second engaging position shown in FIG. 9.

As an improvement, this embodiment includes a limiting structure configured to limit an angle of rotation of the catch 60.

Specifically, the catch 60 includes a first catching portion 61 and a second catching portion 62. The first catching portion 61 has a first limiting surface 611 and a first contact surface 612. The second catching portion 62 has a second contact surface. The second contact surface cooperates with the first contact surface 612 to form the locking portion. The catch 60 further includes a third catching portion 63. The second catching portion 62 cooperates with the third catching portion 63 to catch the anchor rod 01.

The first limiting surface 611 is configured to press against the limiting structure. The limiting structure is formed by a wall of the inner sleeve 20. There is no need to arrange an additional part on the rotation path of the catch 60 for limiting the catch 60.

The second contact surface is a flat surface. An edge of the first locking end 72 is provided with a chamfer 721 to reduce friction between the second contact surface and the first locking end 72, thereby reducing resistance and friction loss.

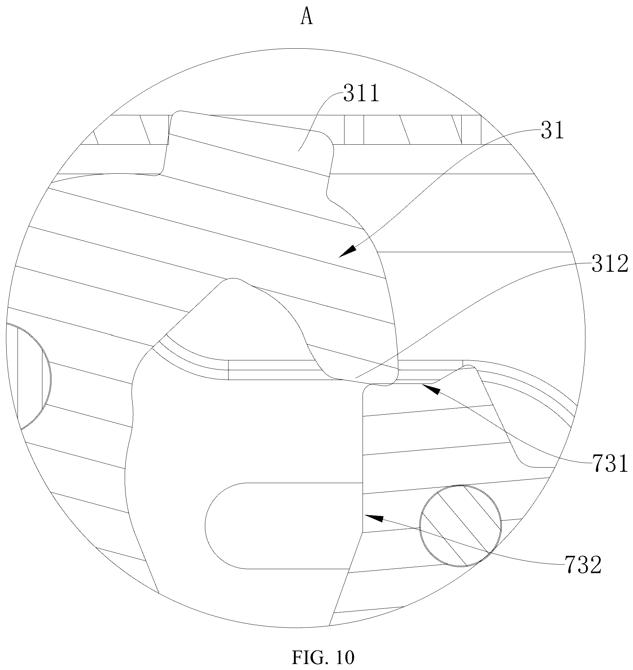

As shown in FIG. 10, the second locking end 73 includes a limiting portion 731 and an avoidance portion 732, and when the connection locking block 70 is at the second position, the limiting portion 731 presses against the positioning member 30. As shown in FIG. 7, when the connection locking block 70 is at the first position, the avoidance portion 732 provides a space for rotation of the positioning member 30.

Specifically, the avoidance portion 732 is a V-shaped recess, which has a simple structure and is easy to fabricate.

Correspondingly, the positioning member 30 includes a fourth catching portion 31, the fourth catching portion 31 is provided with a locking protrusion 311 configured to be inserted into the positioning hole 1a and a pressing portion 312, and the pressing portion 312 and the limiting portion 731 are respectively provided with flat surfaces configured to press against each other, to ensure that the pressing portion 312 and the limiting portion 731 can be effectively engaged with each other.

As another improvement, the ISOFIX mechanism further includes a guide structure configured to guide a sliding direction of the connection locking block 70.

Specifically, as shown in FIG. 4 and FIG. 8, the guide structure is formed by a wall of the inner sleeve 20, and there is no need to arrange an additional part, so that the structure of the ISOFIX mechanism is simplified, and the assembly difficulty is reduced. The guide structure includes an upper limiting protrusion 81 and a lower limiting protrusion 82 respectively arranged on an upper side of the connection locking block 70 and a lower side of the connection locking block 70, and further includes a left limiting protrusion 83 and a right limiting protrusion 84 respectively arranged on a left side of the connection locking block 70 and a right side of the connection locking block 70, to ensure that the limiting portion 731 of the connection locking block 70 can slide in a preset direction to below the pressing portion 312.

Considering that the connection locking block 70 has a long length, a plurality of upper limiting protrusions 81, a plurality of lower limiting protrusions 82, a plurality of left limiting protrusions 83, and a plurality of right limiting protrusions 84 are provided in a length direction of the connection locking block 70 to provide a better guiding effect. As used herein, the term "plurality of" means two or more.

The present invention further provides a safety seat, which includes the ISOFIX mechanism having a locking function, and therefore also has the advantages of reducing acceleration-induced penetration injury of the child at the instant of collision to protect the child.

The basic principles, main features, and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. An International Standards Organization FIX (ISOFIX) mechanism having a locking function, comprising: an outer sleeve; an inner sleeve slidable relative to the outer sleeve; and a positioning member, a connection locking block, and a catch, the positioning member, the connection locking block, and the catch being movably arranged in the inner sleeve, and the positioning member being configured to rotate in a first direction to disengage from a positioning hole on the outer sleeve, **characterized in that**, the connection locking block is provided with a first locking end configured to press against the catch and a second locking end arranged adjacent to the positioning member, wherein at an instant of collision, the catch is configured to instantaneously rotate in the first direction and push the connection locking block to slide from a first position to a second position, and allow the positioning member to rotate in the first direction until the positioning member is blocked by the second locking end at the second position and is retained in the positioning hole, to achieve locking.

2. The ISOFIX mechanism having the locking function according to claim 1, **characterized in that**, the catch has a first engaging position and a second engaging position, a first reset member is arranged between the catch and the connection locking block, the first reset member is configured to apply opposite forces to the connection locking block and the catch, to cause the first locking end to press against a locking portion of the catch, to fix the catch at the first engaging position, an open groove configured for an anchor rod to further push the catch is provided on the inner sleeve, and at the instant of collision, the anchor rod pushes the catch to cause the catch to instantaneously rotate in the first direction to the second engaging position.

3. The ISOFIX mechanism having the locking function according to claim 2, **characterized by** further comprising a limiting structure configured to limit an angle of rotation of the catch.

4. The ISOFIX mechanism having the locking function according to claim 3, **characterized in that**, the catch comprises a first catching portion and a second catching portion, the first catching portion has a first limiting surface and a first contact surface, the first limiting surface is configured to press against the limiting structure, the limiting structure is formed by a wall of the inner sleeve, the second catching portion has a second contact surface, and the second contact surface cooperates with the first contact surface to form the locking portion; and the second contact surface is a flat surface, and an edge of the first locking end is provided with a chamfer.

5. The ISOFIX mechanism having the locking function according to any one of claims 1 to 4, **characterized in that** the second locking end comprises a limiting portion and an avoidance portion, wherein when the connection locking block is at the first position, the avoidance portion provides a space for rotation of the positioning member, and when the connection locking block is at the second position, the limiting portion presses against the positioning member.

6. The ISOFIX mechanism having the locking function according to claim 5, **characterized in that**, the avoidance portion is a V-shaped recess.

7. The ISOFIX mechanism having the locking function according to claim 5, **characterized in that**, the positioning member comprises a fourth catching portion, the fourth catching portion is provided with a locking protrusion configured to be inserted into the positioning hole, and a pressing portion, and the pressing portion and the limiting portion are respectively provided with flat surfaces configured to press against each other.

8. The ISOFIX mechanism having the locking function according to claim 5, **characterized by** further comprising a guide structure configured to guide a sliding direction of the connection locking block.

9. The ISOFIX mechanism having the locking function according to claim 8, **characterized in that**, the guide structure is formed by a wall of the inner sleeve, and the guide structure comprises a plurality of upper limiting protrusions and a plurality of lower limiting protrusions respectively arranged on an upper side of the connection locking block and a lower side of the connection locking block, and further comprises a plurality of left limiting protrusions and a plurality of right limiting protrusions respectively arranged on a left side of the connection locking block and a right side of the connection locking block; and the plurality of upper limiting protrusions, the plurality of lower limiting protrusions, the plurality of left limiting protrusions, and the plurality of right limiting protrusions are provided in a length direction of the connection locking block.

10. A safety seat, **characterized by** comprising the ISOFIX mechanism having the locking function according to any one of claims 1 to 9.
